(19) Europäisches Patentamt
European Patent Office
Office européen des brevets

(11) **EP 3 331 217 A1**

## (12) EUROPEAN PATENT APPLICATION

(43) Date of publication:
**06.06.2018 Bulletin 2018/23**

(51) Int Cl.:
**H04L 29/08** (2006.01)

(21) Application number: **16201857.6**

(22) Date of filing: **02.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **HOB GmbH & Co. KG
90556 Cadolzburg (DE)**

(72) Inventor: **Brandstätter, Klaus
90574 Roßtal (DE)**

(74) Representative: **Rau, Schneck & Hübner
Patentanwälte Rechtsanwälte PartGmbB
Königstraße 2
90402 Nürnberg (DE)**

## (54) METHOD FOR CONNECTING A CLIENT TO A SERVER IN A COMMUNICATION SYSTEM

(57) A method for connecting a client (CLI1) to a server (S1 - S5) in a communication system includes following method steps:

- providing that each cluster server (S1 - S5) knows the network IP addresses of all other cluster servers (S1 - S5),

- providing for a IP address/position-database at each of the cluster servers (S1 - S5),

- exchanging a set of load relevant information parameters between all cluster servers (S1 - S5),

- establishing a first connection between the connect client (CLI1) and a first cluster server (S1) of said plurality of cluster servers (S1 - S5), the first cluster server (S1)

= determining the geographic location of the connect client (CLI1),

= calculating the geographic distances between the geographic location of the connect client (CLI1) and each cluster server (S1 - S5),

= determining the cluster server (S1 - S5) being nearest to the connect client (CLI1), and

= initiating a relocation of the first connection (CON1) of the connect client (CLI1) to a second connection (CON2) with the nearest cluster server (S4).

Fig. 1

**Description**

The present invention refers to method for connecting a client to a server in a communication system.

This communication system according to the common state-of-the-art includes a network, in particular the public Internet, a plurality of cluster servers in this network, which cluster servers, each having at least one public Internet address, are mutually connected and spread over the network at wide distances, in particularly worldwide. Further on the cluster servers are arranged in groups of one or multiple cluster servers. The latter are member of a server cluster which is defined by a cluster domain name usable for a domain name system name resolution (DNS name resolution). Finally a plurality of clients are connectable to the network from which clients at least one - in the following called "connect client" - is to be connected to one of the cluster servers via the network.

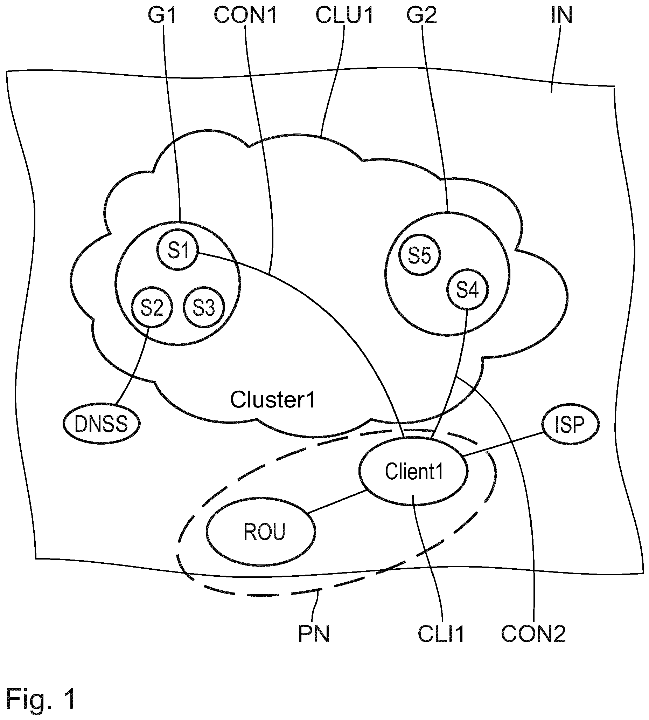

To explain the background of the invention reference is made to the accompanying drawing Fig. 1 which is a rough sketch of such a communication system. In multiple locations (two or more), there are groups G1, G2 of the cluster servers S1 - S5, which consist in general of one or multiple servers S1 - S5. In Fig. 1, cluster servers S1, S2 and S3 belong to group G1, while cluster servers S4 and S5 are belonging to group G2.

All of these servers are connected to the public Internet IN and have at least one public Internet address each, and so are configured in one or multiple Internet DNS servers reachable worldwide (DNS = Domain Name System according e.g. to the standard RFC 882 und RFC 883).

There exists a domain name, for example "cluster1.com", where, when used for DNS name resolution, all Internet addresses of all the servers S 1 - S5 in the so-called geo-cluster are returned. This is also called "Resource Record Set". The Internet DNS servers may return all these Internet addresses in a fixed sequence, i.e. in the sequence as configured. DNS servers can also be configured to return the Internet addresses "round-robin"; this is random, depending on the implementation of the specific DNS-server.

Each of the cluster servers S1 - S5 can have one or multiple Internet addresses configured; at least one Internet address needs to be reachable by using the DNS name "cluster1.com". But also, all single Internet addresses of theses cluster servers S 1 - S5 could be resolved by dedicated DNS names. So a particular server (for example cluster server S1), and only this, could have the DNS name "server1.cluster1.com".

Now when a user working with client CLI1 wants to ask any cluster server S1 - S5 for services, using any software, for example a Web Browser, or any other software which can be used to connect to a server, he connects to the cluster CLU1, hereby addressing the cluster DNS name "cluster1.com". Now, the software running on client CLI1 tries to get a connection to any server of cluster CLU1 and does a DNS request (Domain Name Resolution) asking the DNS servers in the well-known and normal way for the Internet addresses of the domain with the name of "cluster1.com".

The DNS servers will return with a list of network IP addresses as so-called dotted Internet addresses of all of these cluster servers S1 - S5. The client software chooses one of these Internet addresses, normally the first one, and tries to establish a network connection. When this is successful e.g. with cluster server S1, on according connection CON1 is working. When this connection attempt fails, the client software tries to connect to one of the other Internet addresses returned by the DNS servers, mostly in a sequential way. When all connections fail, the client software cannot connect, and mostly gives an error message to the user and terminates.

Now the problem underlying the connection procedure explained above is the fact that the established connection is generated more or less arbitrarily with one of the cluster servers S1 - S5 without taking into consideration the question whether or not the most appropriate cluster server as concerns performance parameters is selected within the desired server cluster.

Inasmuch it is an object of the invention to provide for a method for connecting a client to a server in a server cluster environment which ensures that a client is connected to an appropriate cluster server leading to optimised performance conditions under data transmission and data processing aspects.

The object of the invention is achieved according to the invention by following method steps:

- providing that each cluster server knows the network IP addresses of all other cluster servers of the server cluster and position data representative for the geographic location of each cluster server,
- providing for an IP address/position-database at each of the cluster servers, said IP address/position-database containing all network IP addresses worldwide and position data representative for the geographic location of each network IP address,
- exchanging a set of information parameters between all cluster servers which information parameters include at least the status and current load value of each cluster server, and
- establishing a first connection between the connect client and a first cluster server (S1) of said plurality of cluster servers,
- the first cluster server

= determining the geographic location of the connect client from the network IP address of the connect client by means of the IP address/position-database,

= calculating the geographic distances between the geographic location of the connect client and each cluster server or group of cluster servers,

= determining the cluster server or group being nearest to the connect client, and

= initiating a relocation of the first connection of the connect client to a second connection with the locally nearest cluster server.

The concept of the invention is based on the finding that in a computer communication network with cluster servers and clients to be connected thereto the performance of the connection amongst others depends on the physical distance of the client and the cluster server to which the client is connected. In particularly within the worldwide Internet and the multiple locations spread over the world, where cluster servers for one and the same cluster are located, the occurrence of long distant connections increases and thus sharpens performance problems. This is avoided by integrating the distance between client and cluster server into the connection establishment. As concerns the relocation of the first connection to a second connection according to the last method step of the invention it is to be noted that - of course - when the first connection is determined as being the nearest connection between the connect client and the connected cluster server then the relocation step is suppressed.

According to a preferred embodiment of the invention the current status and/or load value of the nearest cluster server is included as additional input parameter when initiating the relocation of the first connection of the connect client to the second connection. Thus the basic concept of the invention is optimised inasmuch as the per se known concept of load balancing is integrated into the invention.

In more detail the method according to the invention may include the steps that in case that two or more cluster servers are present within one group of cluster servers at a same geographic location the first connection is relocated to an active cluster server within this group with the least load.

The relocation of the first connection due to the foregoing conditions is provided by a "MOVED" process which is defined by the Hypertext Transfer Protocol HTTP.

According to another preferred embodiment of the invention the current status and/or load value of each of the cluster servers are exchanged as input parameters between all cluster servers in defined time intervals. Due to this measure all cluster servers are automatically updated with the parameters necessary for establishing an optimal connection between the cluster servers of one cluster and a connect client.

In further optimising the invention an active status of the cluster servers can be determined by checking an active network connection of each cluster server. Thus in a reliable and simple way it is possible for each cluster server to gain an information about the status of all the other cluster servers within the cluster. Further on the load value of the cluster servers is represented by at least one determining factor like the number of currently connected users, the load of the CPU, the memory usage, the swap activity or the network usage of each cluster server.

According to a further preferred embodiment of the invention each cluster server gets the network IP addresses of all other cluster servers of the server cluster by, preferably automatically, sending a DNS query to an appropriate DNS-server and receiving responses for all other cluster servers containing all their registered network IP addresses. By this measure the invention advantageously uses the well-established DNS query.

Each of the cluster servers may further be configured with the name of the group of which it is a member. This helps to optimise the organisation of the process steps of the present invention.

According to a further preferred embodiment the position data representative for the geographic location of each cluster server and/or client are defined by the usual geographic coordinates of the geographic location of each cluster server. Thus the invention works with reliable and easily available position data.

In case that the connect client is not directly integrated into a public network, but part of a private network which is secured by a firewall and an according router, as position data representative for the geographic location of each client the position data of this router may be used in context with the invention. Alternatively, it may sometimes be convenient or sufficient to use the position data of an Internet service provider - ISP - server used by the client, as by this measure and the calculation effort for finding the optimum cluster server maybe decreased. In fact as a certain ISP server of course handles a plurality of clients, the geographical positions of the latter - although being located at different, but regularly not too far away - are for sake of ease represented by the geographical position of their ISP server.

Finally according to another preferred embodiment of the invention it is proposed that for connecting the connect client to the best appropriate cluster server a combined load balancing between the cluster servers is performed on the basis of an evaluation formula including as variables at least the load value of each cluster server and the calculated distance between each cluster server and the connect client. Due to this measure load-balancing can be done with a set of rules, where different parameters like CPU usage, main memory utilization or swap activity of a server is combined by means of the formula. Now, in this combination, also the distance between the client and a certain cluster group is used in the calculation which server the client should connect to. In this way, a certain load-balancing between the cluster groups is performed.

The evaluation formula may not be fixed, but variably configurable by a cluster administrator, wherein normal mathematical operations can be used, like add, multiply and so on. Brackets and other mathematical functions can be used like logarithm, square-root and so on. The result of this calculation leads to a certain value as decision basis for the selection of a certain cluster server. The higher the value returned by calculating this formula, the higher the load. The server with the least load is selected.

Each cluster server may preferably get knowledge of the network IP addresses of all other cluster servers of the server cluster by means of configuration data provided with configuring the respective cluster server or by using DNS - domain name system - on the basis of the cluster server name. According to a further preferred embodiment of the invention a cluster server, when having a load which is higher than a configured threshold value, is treatable as overloaded and excluded from being connected to the connect client. This helps to optimize the performance of such a client-server-communication system.

Finally it is advantageous when said overloaded cluster server is blocked as target for said "MOVED" process. This is a reliable, effective and simple method to exclude this overloaded cluster server to the connect client.

Further features, details and advantages of the invention become apparent from the following description of preferred embodiments of the invention on the basis of the enclosed drawing. This

**Fig. 1** shows a schematic sketch of a client-server-communication system.

As already explained above the client-server-communication system includes a network IN, namely the public Internet in which a plurality of cluster servers S1 - S5 are mutually connected and spread over the network IN in different places and thus located apart over wide distances like e.g. on different continents of the earth. The cluster servers S1 - S5 further on are gathered under a cluster CLU1 having a defined domain name, like "cluster1.com" which is adequate for DNS name resolution. Further on all network IP addresses of all the servers S1 - S5 in the so-called geo-cluster CLU1 are returned in the so-called "Resource Record Set".

Further on the cluster servers S1 - S5 are arranged in groups, namely cluster servers S1 - S3 in group G1 and cluster servers S4 - S5 in group G2. Both groups G1 and G2 combine cluster servers S1 - S3 and S4 - S5, respectively which are locally near, what can mean e.g. in a certain country or continent, i.e. group G1 in North America and group G2 in Europe.

Now in the network IN a plurality of clients are located, one client CLI1 is depicted in Fig. 1 and named as connect client CLI1 which wants to establish a connection to one of the cluster servers S1 - S5 e.g. for contacting a requested Internet website, like www.google.com or www.amazon.de.

Now an example for establishing an optimised connection between this client CLI1 and one of those servers S1 - S5 is explained in the following together with the technical background:

All the servers S1 - S5 are connected with each other (each with all of the others of all groups), typically using the TCP protocol, maybe encrypted, but another network protocol (Internet Protocol) could also be used. Each Cluster server S1 - S5 can get the Internet Addresses of all other cluster servers S1 - S5 by sending a DNS query to a DNS server DNSS - e.g. cluster server S2, as shown in Fig. 1 - where the response contains all registered Internet Addresses of all servers. Every single cluster server S1 - S5 starts, controls and restarts these connections to all other cluster servers automatically. Over these connections, information parameters are exchanged, and a part of these information parameters being sent to all the other servers S1 - S5 consists of the current load of this server S1 - S5. The current load of a particular server is exchanged in certain time intervals. The load is internally calculated, for example with the number of currently connected users, the load of the CPU(s), the memory or network usage.

As each server S1 - S5 has connections to all other up and running servers S1 - S5, a certain server S1 - S5 can find out if anyone of the other servers S1 - S5 is still up and running, simple by checking if there is an active network connection.

Each of the servers S1 - S5, as part of its configuration, has got a database, and this database contains all Internet addresses, IPv4 and IPv6, worldwide, and their location on this world, normally the geographic coordinates. Each of these servers S1 - S5 is also configured with the name of the group G1, G2 it is member of, and also with the geographic coordinates of the group location on this world of all cluster servers S1 - S5.

When one of these connection attempts between all cluster servers S1 - S5 did succeed, the server, e.g. server S1, which is the cluster member where the client CLI1 is connected to, automatically knows the Internet address of the connecting client CLI1. In some cases - as is outlined in dashed lines in Fig. 1 - when the client CLI1 is located in a private network PN behind a router ROU, and network address translation is carried out by this router ROU, the servers S1 - S5 just know the Internet address of that router ROU. Now the server takes this Internet address of the client CLI1 (or the router ROU) and looks in its database to find out the geographic coordinates of the client CLI1. These can also be the coordinates of the ISP (Internet Service Provider), where the client CLI1 enters the internet.

There may be a certain difference in the location of the real client CLI1 and the location of the ISP, but normally this does not matter. Now the server S1 calculates the distance on earth between the coordinates returned by the database lookup (so of the client CLI1 or ISP) and the coordinates of each of the cluster groups G1, G2 or their cluster servers S1 - S5. The client CLI1 will have the best networking experience when being connected to the nearest cluster server, so the cluster server S1 checks which cluster group or member is nearest to the client, is up and running, and not overloaded. When there are multiple cluster members in the same location (what each server can find out by comparing the entries), the server chooses the one with the least load that is up and running.

In this way, a certain load-balancing is done. When the server S1 finds out, the client CLI1 is currently not connected to the nearest cluster member, it sends back to the client a so-called MOVED reply. In HTTP (Hypertext Transfer Protocol, RFC 1945 etc.) this is defined as a status code of 3xx. In the RFC, there is written: 3xx: Redirection - Further action must be taken in order to complete the request.

Together with this message MOVED, it sends the dotted (binary) Internet Address or a known DNS name valid only for this particular server back to the client. This could be "server4.cluster1.com".

In the HTTP header, the part which sends the Internet Address of the new server S4 is called 'Location'. The current connection CON1 is then terminated by either side, and the client connects to the server S4 where he got the address (dotted or DNS name) by receipt in the MOVED reply. Thus with this - what is called here - "MOVED process" the better connection CON2 is established with less distance between the connect client CLI1 and the cluster server S4 and may be less load of the server S4 compared to server S1.

MOVED is implemented in the HTTP protocol (Status Code 3xx), but it can also in a simple way be implemented in every other networking protocol or software.

It is also possible to have a certain load-balancing between the cluster groups G1, G2. Not only when a certain cluster group G1, G2 is overloaded, also when there is additional configuration that the client CLI1 is MOVED to another (not the nearest) cluster group G1 where the distance between the client CLI1 and the cluster server S1 is longer than the shortest distance to one of the servers, like cluster server S4 related to the client CLI1.

Load-Balancing can be done with a set of rules, where different parameters like CPU usage, main memory utilization or swap activity of a server is combined. Now, in this combination, also the distance between the client CLI1 and a certain cluster group G1, G2 can be used in the calculation which cluster server S1 - S5 the client CLI1 should connect to. In this way, a certain load-balancing between the cluster groups is done.

This combination of the different load parameters with the distance can be done by a formula - see FORM below. This formula FORM is not fixed, but configurable by the cluster administrator.

In the formula FORM, normal mathematical operations can be used, like add, multiply and so on. Brackets can be also used. Further on in this formula FORM, mathematical functions can be used like logarithm, square-root and so on.

The higher the value returned by calculating this formula FORM, the higher the load of the cluster server been evaluated calculation. Within the concept of this invention the server with the least calculated load is selected.

An example of such a formula FORM including the distance is

$$load = distance + 100 * CPU\text{-}load + \log(memory\text{-}in\text{-}use) \quad \text{- FORM -}$$

The variables in this example are:

- distance: distance in kilometers between client and server
- CPU-load: percentage of the CPU power currently in use on this server
- memory-in-use: memory of main storage currently occupied by programs and data on this server, in megabytes

CPUs (cores) normally execute machine-instructions at a certain speed, depending on the clock frequency. Newer CPUs vary the speed, sometimes faster (for a short time only), sometimes slower. But still it is true that either a CPU/core is executing instructions or it is in the wait state where it can only be awoken by an interrupt. The CPU-load percentage is the percentage of the time a CPU is busy, executing instructions, not idle, relative to the total time. This percentage of CPU load is always calculated over short time intervals, for example some seconds.

Different vendors count the load of a total machine with multiple cores differently. Some vendors say, a machine with eight cores and all cores busy all the time has 800 % load. Other vendors divide this number by the number of cores, so still the maximum load is 100 %.

Now with a formula exclusively for the load, a certain threshold value (a higher number) can be compared to the load calculated. The load calculated in this case uses a formula which does not contain the distance between the client and the server. When the calculated load is higher as the configured threshold value, as it is configured by the administrator, this server can be treated as overloaded. So, an overloaded server will no more be used as a target for "MOVED".

**Claims**

1. Method for connecting a client (CLI1) to a server (S1 - S5) in a communication system including

   - a network (IN), in particular the public Internet,
   - in said network (IN) a plurality of cluster servers (S1 - S5),

      = which are mutually connected and spread over the network (IN) at wide distances, in particularly worldwide,
      = which are arranged in groups (G1, G2) of one or multiple cluster servers (S1-S5),
      = each of which has at least one public Internet address, and
      = each of which is a member of a server cluster (S1 - S5) which is defined by a cluster domain name usable for a domain name system -DNS- name resolution, and

   - a plurality of clients (CLI1) connectable to the network, at least one of which clients - connect client (CLI1) - is to be connected to one of said cluster servers (S1 - S5) via the network,
   **characterised by** following method steps:

      - providing that each cluster server (S1 - S5) knows the network IP addresses of all other cluster servers (S1 - S5) of the server cluster (CLU1) and position data representative for the geographic location of each cluster server (S1 - S5),
      - providing for an IP address/position-database at each of the cluster servers (S1 - S5) said IP address/position-database containing all network IP addresses worldwide and position data representative for the geographic location of each network IP address,
      - exchanging a set of information parameters between all cluster servers (S1 - S5) which information parameters include at least the status and current load value of each cluster server (S1 - S5),
      - establishing a first connection between the connect client (CLI1) and a first cluster server (S1) of said plurality of cluster servers (S1 - S5),
      - the first cluster server (S1)

         = determining the geographic location of the connect client (CLI1) from the network IP address of the connect client by means of the IP address/position-database,
         = calculating the geographic distances between the geographic location of the connect client (CLI1) and each cluster server (S1 - S5) or group (G1, G2),
         = determining the cluster server (S1 - S5) or group (G1, G2) being nearest to the connect client (CLI1), and
         = initiating a relocation of the first connection (CON1) of the connect client (CLI1) to a second connection (CON2) with the nearest cluster server (S4).

2. Method according to claim 1, **characterized in that** the current status and/or load value of the nearest cluster server (S1 - S5) is included as additional input parameter when initiating the relocation of the first connection (CON1) of the connect client (CLI1) to the second connection (CON2).

3. Method according to claim 2, **characterized in that** in case that two or more cluster servers (S1 - S5) are present within one group (G1, G2) at a same geographic location the first connection (CON1) is relocated to an active cluster server (S1 - S5) within this group (G1, G2) with the least load.

4. Method according to at least one of the preceding claims, **characterized in that** the relocation of the first connection (CON1) is provided by a "MOVED" process defined under the Hypertext Transfer Protocol -HTTP-.

5. Method according to claim 2 or 3, **characterized in that** the current status and/or load value of each of the cluster servers (S1 - S5) are exchanged as input parameters between all cluster servers (S1 - S5) in defined time intervals.

6. Method according to at least one of claims 2 to 5, **characterized in that** an active status of the cluster servers (S1 - S5) is determined by checking an active network connection of each cluster server (S1 - S5) and/or **in that** the load value of the cluster servers (S1 - S5) is represented by at least one determining factor selected from a number of currently connected users, a load of the CPU, a memory usage, a swap activity or a network usage of each cluster server (S1 - S5).

7. Method according to at least one of the preceding claims, **characterized in that** each cluster server (S1 - S5) gets the network IP addresses of all other cluster servers (S1 - S5) of the server cluster (CLU1) by, preferably automatically, sending a DNS query to an appropriate DNS server (DNSS) and receiving responses for all other cluster servers (S1 - S5) containing all their registered network IP addresses.

8. Method according to at least one of the preceding claims, **characterized in that** each of the cluster servers (S1 - S5) is further configured with the name of the group (G1, G2) it is member of.

9. Method according to at least one of the preceding claims, **characterized in that** the position data representative for the geographic location of each cluster server (S1 - S5) and/or client (CLI1) are defined by the geographic coordinates of the geographic location of each cluster server (S1 - S5) and/or client (CLI1).

10. Method according to at least one of the preceding claims, **characterized in that**, as position data representative for the geographic location of each client (CLI1), the position data of a router (ROU) connecting a private network (PN), in which the client is located, to the public network (IN) or the position data of an Internet service provider - ISP - server (ISP) used by the client (CLI1) are used.

11. Method according to at least one of the preceding claims, **characterized in that** for connecting the connect client (CLI1) to the best appropriate cluster server (S1 - S5) a combined load balancing between the cluster servers (S1 - S5) is performed on the basis of an evaluation formula (FORM) including as variables the load value of each cluster server (S1 - S5) and the calculated distance between each cluster server (S1 - S5) and the connect client (CLI1).

12. Method according to claim 10, **characterized in that** the evaluation formula (FORM) is variably configurable by a cluster administrator.

13. Method according to at least one of the preceding claims, **characterized in that** each cluster server (S1 - S5) gets knowledge of the network IP addresses of all other cluster servers (S1 - S5) of the server cluster (CLU1) by means of configuration data provided with configuring the respective cluster server (S1 - S5) or by using DNS - domain name system - on the basis of the cluster server name.

14. Method according to at least one of the preceding claims, **characterized in that** a cluster server (S1 - S5), when having a load which is higher than a configured threshold value, is treatable as overloaded and excluded from being connected to the connect client (CLI1).

15. Method according to claim 4 and 13, **characterized in that** said overloaded cluster server (S1 - S5) is blocked as target for the "MOVED"process.

Fig. 1

Europäisches
Patentamt

European
Patent Office

Office européen
des brevets

# EUROPEAN SEARCH REPORT

**Application Number**

EP 16 20 1857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WENTING TANG ET AL: "Load distribution via static scheduling and client redirection for replicated Web servers", 2012 41ST INTERNATIONAL CONFERENCE ON PARALLEL PROCESSING WORKSHOPS, 1 January 2000 (2000-01-01), pages 127-133, XP055092939, ISSN: 1530-2016, DOI: 10.1109/ICPPW.2000.869096 ISBN: 978-1-46-732509-7 * abstract * * paragraphs [0001], [0002], [02.2], [02.3], [02.4] * | 1-15 | INV. H04L29/08 |
| X | US 2015/006615 A1 (WAINNER WARREN SCOTT [US] ET AL) 1 January 2015 (2015-01-01) * paragraphs [0002], [0012], [0024], [0027], [0030] - [0034], [0038] - [0043] * | 1-15 | |
| A | MOURAD A ET AL: "SCALABLE WEB SERVER ARCHITECTURES", PROCEEDINGS IEEE INTERNATIONAL SYMPOSIUM ON COMPUTERS ANDCOMMUNICATIONS, XX, XX, 1 July 1997 (1997-07-01), pages 12-16, XP000199852, * paragraphs [0001], [02.1] * | 1-14 | TECHNICAL FIELDS SEARCHED (IPC) H04L |

The present search report has been drawn up for all claims

| Place of search | Date of completion of the search | Examiner |
|---|---|---|
| Berlin | 9 May 2017 | Goller, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 1857

This annex lists the patent family members relating to the patent documents cited in  the above-mentioned European search report.
The members are as contained in the European Patent Office EDP file on
The European Patent Office is in no way liable for these particulars which are merely given for the purpose of information.

09-05-2017

| Patent document cited in search report | Publication date | Patent family member(s) | Publication date |
|---|---|---|---|
| US 2015006615 A1 | 01-01-2015 | CN 105340244 A<br>EP 3014855 A1<br>US 2015006615 A1<br>WO 2014210551 A1 | 17-02-2016<br>04-05-2016<br>01-01-2015<br>31-12-2014 |

EPO FORM P0459

For more details about this annex : see Official Journal of the European Patent Office, No. 12/82